(19) Europäisches Patentamt
European Patent Office
Office européen des brevets

(11) **EP 4 664 817 A1**

(12) **EUROPEAN PATENT APPLICATION**

(43) Date of publication:
**17.12.2025  Bulletin 2025/51**

(21) Application number: **24305935.9**

(22) Date of filing: **14.06.2024**

(51) International Patent Classification (IPC):
**H04L 9/00** *(2022.01)*      **H04L 9/32** *(2006.01)*

(52) Cooperative Patent Classification (CPC):
**H04L 9/003; H04L 9/3252;** H04L 2209/046;
H04L 2209/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **Venelli, Alexandre**
  **31023 Toulouse (FR)**

• **Lampe, Christoph**
  **31023 Toulouse (FR)**

(74) Representative: **Krott, Michel**
**NXP Semiconductors**
**Intellectual Property Group**
**High Tech Campus 60**
**5656 AG  Eindhoven (NL)**

Remarks:
Amended claims in accordance with Rule 137(2)
EPC.

(54) **SECURING ELLIPTIC CURVE DIGITAL SIGNATURE ALGORITHM (ECDSA) NONCE COMMUNICATED BETWEEN SYMMETRIC AND ASYMMETRIC CRYPTOGRAPHIC CO-PROCESSORS IN A HETEROGENEOUS SYSTEM**

(57)     Systems and methods for securing an Elliptic Curve Digital Signature Algorithm (ECDSA) nonce communicated between symmetric and asymmetric cryptographic co-processors in a heterogeneous system are discussed. In some embodiments, a processor may include: a symmetric portion configured to generate Boolean masked shares, wherein the Boolean masked shares constitute a nonce; and an asymmetric portion coupled to the symmetric portion, the asymmetric portion configured to produce an ECDSA signature based, at least in part, upon the nonce.

**FIG. 3**

## Description

Field

This disclosure relates generally to electronic circuits, and more specifically, to systems and methods for securing an Elliptic Curve Digital Signature Algorithm (ECDSA) nonce communicated between symmetric and asymmetric cryptographic co-processors in a heterogeneous system.

Background

The Digital Signature Algorithm (DSA) is a public-key cryptosystem and Federal Information Processing Standard for digital signatures. The algorithm uses a key pair including a public key and a private key. The private key is used to generate a digital signature for a message, and such a signature can be verified by using the signer's corresponding public key. The digital signature provides message authentication (the receiver can verify the origin of the message), integrity (the receiver can verify that the message has not been modified since it was signed) and non-repudiation (the sender cannot falsely claim that they have not signed the message).

The Elliptic Curve Digital Signature Algorithm (ECDSA) offers a variant of the DSA, which uses Elliptic-Curve Cryptography (ECC). The ECDSA signing algorithm (RFC 6979, published by the Internet Engineering Task Force "IETF") takes as input a message and a private key. The algorithm produces as output a signature, which includes a pair of integers that encode information sufficient to confirm that the signer knows the message and the private key; proof of which is verifiable using a corresponding public key.

Summary

In accordance with a first aspect of the present disclosure, a processor is provided, comprising: a symmetric portion configured to generate Boolean masked shares, wherein the Boolean masked shares constitute a nonce; and an asymmetric portion coupled to the symmetric portion, the asymmetric portion configured to produce an Elliptic Curve Digital Signature Algorithm (ECDSA) signature based, at least in part, upon the nonce.

In one or more embodiments, the symmetric portion is configured to produce the Boolean masked shares using a Deterministic Random Bit Generator (DRBG).

In one or more embodiments, the symmetric portion is configured to send the Boolean masked shares to the asymmetric portion via a bus.

In one or more embodiments, the bus comprises an Advanced Microcontroller Bus Architecture (AMBA) with Advanced eXtensible Interface (AXI) interconnect.

In one or more embodiments, a first Boolean masked share has a first word length or size, and a second Boolean masked share has a different word length or size.

In one or more embodiments, the first word length or size comprises 256 bits.

In one or more embodiments, the second word length or size comprises 32 or 64 bits.

In one or more embodiments, the second word length or size matches a word length or size of the processor.

In one or more embodiments, the asymmetric portion is configured to convert the Boolean masked shares into arithmetic masked shares.

In one or more embodiments, arithmetic masked shares comprise modular arithmetic masked shares.

In accordance with a second aspect of the present disclosure, an electronic device is provided, comprising: a memory; and a processor coupled to the memory, the processor further comprising: a symmetric portion configured to generate a first Boolean masked share and a second Boolean masked share; and an asymmetric portion coupled to the symmetric portion, the asymmetric portion configured to produce an Elliptic Curve Digital Signature Algorithm (ECDSA) signature based, at least in part, upon the first and second Boolean masked shares.

In one or more embodiments, the first Boolean masked share has a first word length or size, and the second Boolean masked share has a second word length or size.

In one or more embodiments, the first word length is larger than a word length or size of the processor, and the second word length or size matches a word length or size of the processor.

In one or more embodiments, the asymmetric portion is configured to convert the Boolean masked shares into arithmetic masked shares.

In one or more embodiments, arithmetic masked shares comprise modular arithmetic masked shares.

In accordance with a third aspect of the present disclosure, a method is conceived, comprising: receiving, by an asymmetric portion of a processor from a symmetric portion of the processor, first and second Boolean masked shares; and producing a digital signature based, at least in part, upon the first and second Boolean masked shares.

In one or more embodiments, the first Boolean masked share has a first word length or size, and the second Boolean masked share has a second word length or size.

In one or more embodiments, the first word length is larger than a word length or size of the processor, and the second word length or size matches a word length or size of the processor.

In one or more embodiments, the asymmetric portion is configured to convert the Boolean masked shares into arithmetic masked shares.

In one or more embodiments, arithmetic masked shares comprise modular arithmetic masked shares.

Brief Description of the Drawings

The present disclosure is illustrated by way of example and are not limited by the accompanying figures, in which like references indicate similar elements. Elements in the figures are illustrated for simplicity and clarity and have not necessarily been drawn to scale.

FIG. 1 is a block diagram of an example of an electronic device, according to some embodiments.

FIG. 2 is a block diagram of an example of a conventional mechanism for sharing an Elliptic Curve Digital Signature Algorithm (ECDSA) nonce between symmetric and asymmetric processors ("Prior Art").

FIG. 3 is a block diagram of an example of a secure mechanism for sharing an ECDSA nonce between symmetric and asymmetric cryptographic co-processors, according to some embodiments.

FIG. 4 is a flowchart of an example of a secure method for sharing an ECDSA nonce between symmetric and asymmetric cryptographic co-processors, according to some embodiments.

Detailed Description

Elliptic Curve Digital Signature Algorithm ("ECDSA," RFC 6979) is utilized across various fields due to its efficiency and robust security. For example, ECDSA is integral to the security of web communications, particularly in securing Secure Sockets Layer (SSL)/Transport Layer Security (TLS) certificates that facilitate Hypertext Transfer Protocol Secure (HTTPS) connections. ECDSA is also employed in software authentication to ensure the integrity and authenticity of software applications and updates. In the context of the Internet of Things (IoT), ECDSA helps secure communications between devices and authenticate software updates, maintaining the overall security of IoT networks. Moreover, in the world of cryptocurrencies, ECDSA secures transactions by enabling the cryptographic verification of digital signatures, ensuring that only legitimate transactions are processed.

Generally, the ECDSA signing algorithm receives a message and a private key as inputs. It then generates a signature that includes a pair of integers encoding information sufficient to verify that the signer is aware of both the message and the private key. This verification may be conducted using a corresponding public key. In this process, a nonce plays an essential role in maintaining security.

As used herein, the term "nonce" refers to a number or bit of data used only once. In the context of the ECDSA, it is a randomly generated number that is utilized once per signature to ensure the uniqueness and security of the cryptographic process.

The nonce is integrated into the ECDSA algorithm to add randomness, which is important for the security of the signature. Reuse or predictability of the nonce can lead to serious vulnerabilities, including the potential exposure of the private key. Once used, the nonce must not be reused in subsequent signatures to prevent security breaches; so each signature typically requires a new nonce to maintain cryptographic security standards. As such, the nonce's implementation in ECDSA is important to the robustness of digital signatures, ensuring that they cannot be forged or tampered with.

When a microcontroller processes sensitive data, however, it is vulnerable to physical attacks, such as side-channel or fault attacks. This is particularly relevant in the context of ECDSA, where the nonce is highly sensitive to compromise-even partial disclosure of a few bits by an attacker can enable the deduction of the private key through a lattice attack.

To address these, and other concerns, systems and methods described herein ensure comprehensive protection of the ECDSA nonce inside of a microcontroller or processor. In some implementations, these systems and methods may protect the nonce from its creation within a Deterministic Random Bit Generator (DRBG) component to its transmission to the asymmetric Elliptic Curve Cryptography (ECC) component, and its subsequent storage in memory. As such, these systems and methods may prevent physical attacks aimed at recovering or tampering with the ECDSA nonce.

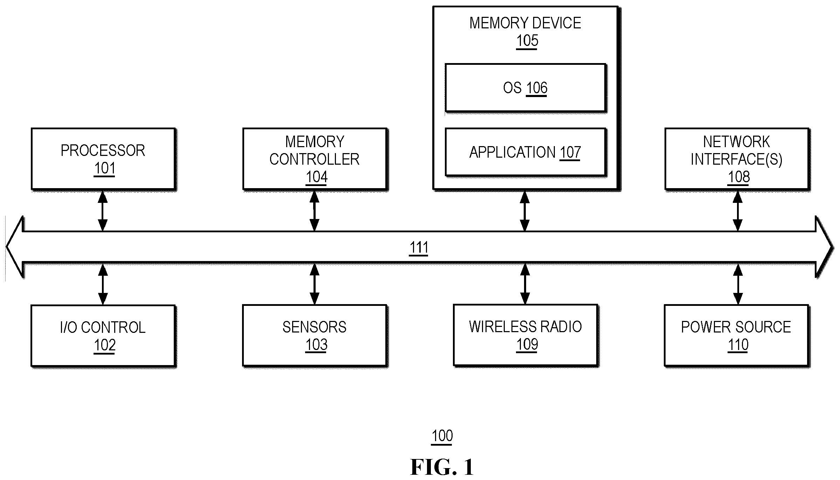

FIG. 1 shows an example of electronic device 100 where systems and methods for securing an ECDSA nonce may be implemented. In various embodiments, device 100 may be integrated with electronic circuitry, microprocessors, microcontrollers, memory, input output (I/O) logic control, communication interfaces and components, as well as other hardware, firmware, or software. Moreover, one or more components of device 100 may be part of a Systems-on-Chip (SoC) or heterogenous computing platform.

Device 100 includes processor 101 (e.g., a controller, a microcontroller, a digital signal processor, etc.) configured to execute program instructions stored in memory device 105 for implementing various systems and methods described herein. Processor 101 may include components of an integrated circuit, programmable logic device, a logic device formed using one or more semiconductors, and other implementations in silicon or hardware.

In some cases, processor 101 may include two units: (i) a low-power microprocessor, core, or domain, and (ii) a high-power microprocessor, core, or domain. The high-power microprocessor may execute computationally intensive operations, whereas the low-power microprocessor may manage simpler processes, such as detecting inputs from one or more sensors. The low-power processor may also wake or initialize the high-power processor for computationally intensive processes. More generally, processor 101 may include any number of such units or domains.

In device 100, data bus 111 couples its various components and enables data communication between those components. Data bus 111 may be implemented as any suitable combination of one or more bus structures or bus architectures. Device 100 also includes power source 110, such as a battery or an AC-DC power supply.

Sensors 103 may be implemented to detect various properties such as acceleration, temperature, humidity, water, supplied power, proximity, external motion, device motion, sound signals, ultrasound signals, light signals, fire, smoke, carbon monoxide, Global-Positioning-Satellite (GPS) signals, radio frequency (RF), other electromagnetic signals or fields, or the like. As such, sensors 103 may include any one or a combination of temperature sensors, humidity sensors, hazard-related sensors, other environmental sensors, accelerometers, microphones, optical sensors up to and including cameras (e.g., charged coupled-device or video cameras, active or passive radiation sensors, GPS receivers, and RF identification (ID) detectors).

Memory controller 104 and memory device 105 may implement any type of nonvolatile memory or other suitable electronic storage device. Device 100 may include various firmware or software, such as Operating System (OS) 106 maintained as computer executable instructions in memory 105 and executed by processor 101. Moreover, application 107 may include a distance estimation application that implements various aspects of the systems and methods described herein.

Input-output (I/O) control 102 may be configured to receive input from a user or provide information to the user. For example, I/O control 102 may also include mechanical or virtual components that respond to a user input. For example, the user can mechanically move a sliding or rotatable component, or the motion along a touchpad may be detected, and may correspond to a setting of device 100.

Device 100 includes network interfaces 108, such as a mesh network interface for communication with other devices in a wireless mesh network, and an external network interface for network communication, such as via the Internet. Wireless radio system 109 may be used for wireless communication with other devices via network interface 108 and for multiple, different wireless communications systems. For instance, radio system 109 may include a radio device, antenna, and chipset implemented for any given wireless communications technology, such as, for example, Wi-Fi, BLUETOOTH (BT), BT Low-Energy (BLE), Mobile Broadband, point-to-point IEEE 802.15.4, etc.

In various embodiments, processor 101 may include a heterogeneous multiprocessor, which blends different types of cores or co-processors to enhance performance, reduce power consumption, and increase system reliability and security. Unlike homogeneous multicore systems that utilize identical cores, heterogeneous systems leverage varied core architectures to efficiently handle specific tasks.

Particularly, heterogeneous multiprocessors may integrate various core types and specialized hardware within a single SoC. These architectures ensure that each application can utilize the most appropriate resources, increasing performance and energy efficiency. For example, in some heterogeneous systems, a symmetric cryptographic core may be configured to perform symmetric cryptographic operations where tasks are simple while an asymmetric cryptographic core may be configured to perform more complex and power consuming tasks.

Symmetric cores, optimized for algorithms like Advanced Encryption Standard (AES) and ChaCha20, may use the same key for encryption and decryption, providing fast, bulk data protection. Asymmetric cores, designed for more computationally intensive tasks like those in Rivest-Shamir-Adleman (RSA) and ECC, use key pairs for secure data transmission and digital signatures. These specialized cores enhance security and performance, supporting applications such as secure communications, data protection, and authentication systems.

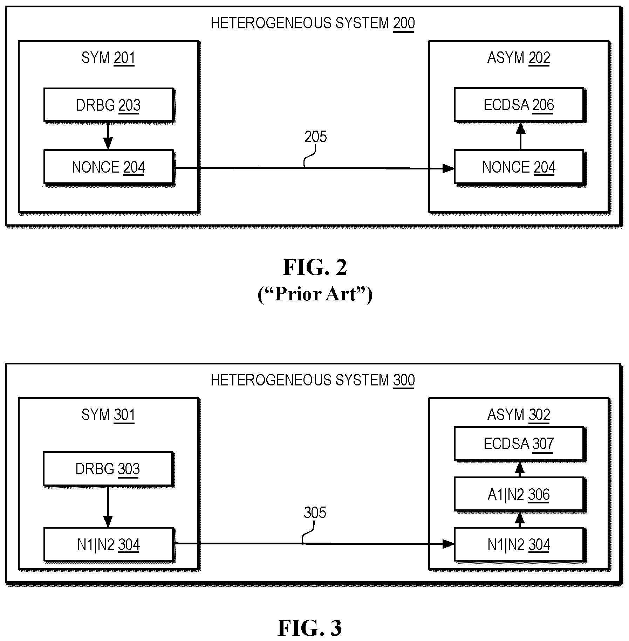

To illustrate this, FIG. 2 is a block diagram of an example of a conventional mechanism for sharing an ECDSA nonce between symmetric and asymmetric processors. In this case, heterogeneous system 200 (e.g., processor 101) includes symmetric (SYM) cryptographic processing core or co-processor 201 and asymmetric (ASYM) cryptographic processing core or co-processor 202 coupled via transfer bus 205.

The nonce required for the ECDSA signature is produced by DRBG component 203, which employs symmetric cryptographic primitives (e.g., following AES and operating within SYM co-processor 201. Once nonce 204 is generated, it is conveyed via transfer bus 205 from SYM co-processor 201 to the memory of ASYM co-processor 202. Subsequently, nonce 204 is used by ASYM co-processor 202's ECDSA module 206 to produce an ECDSA signature.

It should be noted, however, that co-processors 201 and 202 are not equipped with protections against physical attacks, nor is there any security on transfer bus 203. Accordingly, nonce 204 is susceptible to attacks between 203 and 204 in SYM co-processor 201, over bus 205, and then again between 204 and 206 in ASYM co-processor 202. Traditional countermeasures designed to protect against such attacks cannot be applied consistently over the entire lifecycle of nonce 204 due to its transition from a symmetric context within SYM co-processor 201 to an asymmetric context within ASYM co-processor 202.

To address these, and other concerns, systems and methods described herein introduces end-to-end protection of the ECDSA nonce, spanning its generation by the DRBG component, and extending to its transfer, storage, and utilization within the ECC component. In various implementations, these systems and methods may impose minimal performance and memory overhead while protecting both the confidentiality and integrity of the nonce against fault and side-channel attacks.

FIG. 3 is a block diagram of an example of a secure mechanism for sharing ECDSA nonce between symmetric and asymmetric processors. In various embodiments, heterogeneous system 300 may employ a dual-masking strategy to enhance the security of ECDSA nonce handling.

In the context of ECDSA and cryptography in general, a "share" typically refers to a part of a secret in schemes that use secret sharing. Secret sharing is a method by which a secret, such as a private key or any sensitive information, is divided into multiple parts, known as shares.

In various embodiments, different masking techniques, such as Boolean, arithmetic, and modular arithmetic masking may be employed to split a plain value v, such as an ECDSA nonce, into secure shares to protect it during processing.

Particularly, Boolean masking involves dividing the value v into two Boolean shares or masks, x and r. The relationship between these shares and the original value is established through the equation $v = x \oplus r$, where $\oplus$ denotes the bitwise exclusive OR operation. This technique is beneficial for ensuring that the individual shares do not disclose any information about v.

In arithmetic masking, the value v is divided into two arithmetic shares or masks, a and r. These shares sum to v under standard arithmetic addition, expressed as $v = a + r$. This form of masking is straightforward and allows for easy computation and recombination of shares.

Modular arithmetic masking extends arithmetic masking by introducing a modulus n, where the addition of the shares is performed modulo n. Here, v is split into a and r such that $v = a +_n r$, with $+_n$ representing addition modulo n. This method is particularly useful in cryptographic settings where operations need to be constrained within a set range.

Algorithms exist for converting Boolean shares into modular arithmetic shares, in the case where the modulus is a power of 2 (such as $2^k$ for some k), while ensuring the integrity and confidentiality of the data throughout the conversion process.

However, most asymmetric cryptographic primitives utilize modular arithmetic operations with a modulus that generally is not a power of 2. For this reason, systems and methods described herein may employ an arithmetic mask conversion algorithm adapted to handle arbitrary moduli.

Consider a conversion algorithm that takes, as inputs, two Boolean shares (x, r), bitlength of input/output values s, modulus $n < 2^s$, with an implementation specific extension factor $e \geq 1$. The algorithm, upon execution, produces an modular arithmetic share a, such that $x \oplus r = a +_n r$. In that case, the algorithm may be as follows:

1.

$$1.\ x' = x + 2^s$$

2. $a' = B2A_{s+e}(x',r)$ (where B2A denotes any algorithm that transforms Boolean shares to modular arithmetic sharing with modulus $2^{s+e}$).

3. $a = a' -_n 2^s$ (for simpler side-channel hardened implementation, it may be assumed that $a' < 2^{s+1}$ even for e > 1).

The algorithm starts with two Boolean shares (x, r), where x is adjusted by adding $2^s$ to ensure that $x' = x + 2^s$. This adjustment guarantees that the intermediate result $(x' \oplus r)$ is always greater than r, preventing underflow issues during the subsequent conversion. The Boolean shares are then converted and produce a modular arithmetic share a, such that $x \oplus r = a +_n r$. The conversion ensures that the transformed value a' is always less than $2^{s+1}$, simplifying side-channel hardened implementation and reducing the potential for side-channel leakage.

The extension factor e may be chosen (*i.e.,* adjustable) based on the bit length of one machine word (*e.g.,* 32 bits, 64 bits, etc.), to ensure that the converted values align with system architecture requirements. Finally, the extended bit length from the addition of $2^s$ is corrected by a modular subtraction, truncating a' back to the intended size since $n < 2^s$.

Once converted, the nonce may be stored as arithmetically masked in the ASYM memory, ready for processing in ECDSA operations while remaining masked. In some cases, n may be larger than the base point order of the elliptic curve, to conform to specific requirements on the nonce generation such as using extra bits.

Now referring back to FIG. 3, heterogeneous system 300 (*e.g.,* processor 101) includes symmetric (SYM) processor core or co-processor 301 and asymmetric (ASYM) processing core or co-processor 302 coupled via transfer bus 305. Transfer bus 305 may include, for example, an Advanced Microcontroller Bus Architecture (AMBA) with Advanced eXtensible Interface (AXI) interconnect.

DRBG component 303, which operates within SYM co-processor 201, produces two Boolean masked shares 304 (N1 and N2; where "|" means the ECDSA nonce in this case is a concatenation of N1 and N2). Boolean masked shares 304 are conveyed via transfer bus 305 from SYM co-processor 301 to the memory of ASYM co-processor 302. Then, Boolean masked shares 304 are converted into arithmetic masked shares 306 (A1 and N1; where "|" represents a concatenation operation) or modular arithmetic shares by ASYM co-processor 302, which are used by ECDSA module 307 to produce an ECDSA signature.

The transfer of two discrete additive shares to ECDSA module 307 for signature generation may be implemented efficiently, especially if additional multiplicative blinding is applied during the scalar multiplication.

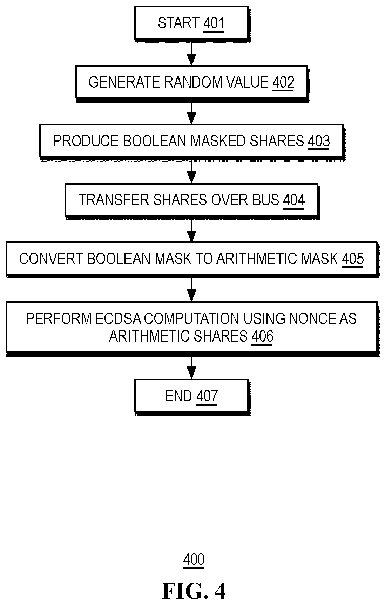

FIG. 4 is a flowchart of an example of method 400 for securely sharing ECDSA nonce between symmetric and asymmetric processors. In various embodiments, method 400 may be performed, at least in part, by heterogeneous system 300.

Specifically, method 400 begins at 401. At 402, DRBG component 303 within SYM co-processor 301 may generate a random value, and at 403, SYM co-processor 301 may transform the random value into two or more Boolean masked shares 304. At 404, SYM co-processor 201 may transfer Boolean masked shares 304 to ASYM co-processor 302 over bus 305.

At 405, ASYM co-processor 302 may convert the Boolean masked shares 304 into arithmetic or modular arithmetic masked shares 306, better suited for the arithmetic operations required in ECDSA computation. At 406, ECDSA module 307 accepts and processes the nonce as two arithmetic masked shares. Within ASYM co-processor 302 and memory, the nonce remains stored in its masked form.

As such, the use of Boolean masking in the SYM co-processor 301 optimizes performance, while the arithmetic masking in ASYM co-processor 302 aligns with the computational needs of ECDSA. By combining both masking types, method 400 achieves minimal overhead in terms of performance, memory, and code size, thus offering an effective solution to secure ECDSA nonce processing.

In various embodiments, systems and methods described herein secure a sensitive security asset, such as an ECDSA nonce, from its creation to its utilization, safeguarding against side-channel and fault attacks. As such, the systems and methods described herein may effectively bridge the gap between symmetric and asymmetric contexts, making it suitable for any generic microcontroller equipped with hardware coprocessors that facilitate efficient symmetric and asymmetric operations.

By employing 2-share Boolean and arithmetic masking, the mechanism ensures that there is no single point of failure in processing the security asset. Although the examples described herein used two shares, more shares may be implemented in each application.

Although the nonce described herein is generally characterized as an ECDSA nonce, it should be noted that other embodiments may use other signature algorithms. Regardless of the signature scheme, so long as a nonce is passed between symmetric and asymmetric cryptographic co-processors or cores, blocks 303-304 and/or 306 may be implemented to secure the nonce between them.

As such, systems and methods for securing an ECDSA nonce communicated between symmetric and asymmetric cryptographic co-processors are provided. In an illustrative, non-limiting embodiment, the symmetric portion may be configured to produce the Boolean masked shares using a DRBG.

The symmetric portion may also be configured to send the Boolean masked shares to the asymmetric portion via a bus. The bus may include an AMBA with AXI interconnect, or the like.

A first Boolean masked share may have a first word length or size, and a second Boolean masked share may have a different word length or size. The first word length or size may include 256 bits. The second word length or size may include 32 or 64 bits. The second word length or size may match the word length or size of the processor.

The asymmetric portion may be configured to convert the Boolean masked shares into arithmetic masked shares. Arithmetic masked shares may include modular arithmetic masked shares.

In another illustrative, non-limiting embodiment, an electronic device may include a memory and a processor coupled to the memory, the processor further comprising: a symmetric portion configured to generate a first Boolean masked share and a second Boolean masked share; and an asymmetric portion coupled to the symmetric portion, the asymmetric portion configured to produce an ECDSA signature based, at least in part, upon the first and second Boolean masked shares.

In yet another illustrative, non-limiting embodiment, a method may include receiving, by an asymmetric portion of a processor from a symmetric portion of the processor, first and second Boolean masked shares; and producing a digital signature based, at least in part, upon the first and second Boolean masked shares.

In many implementations, systems and methods described herein may be incorporated into a wide range of electronic devices including, for example, computer systems or Information Technology (IT) products; consumer devices or appliances; scientific instrumentation; industrial robotics; medical or laboratory electronics; transportation vehicles such as automobiles, buses, trucks, trains, watercraft, aircraft, etc.; military equipment, etc.

For sake of brevity, conventional techniques have not been described in detail herein. Furthermore, the connecting lines shown in the various figures contained herein have been intended to illustrate relationships (e.g., logical) or physical couplings (e.g., electrical) between the various elements. It should be noted, however, that alternative relationships and connections may be used in other embodiments. Moreover, circuitry described herein may be implemented either in silicon or another semiconductor material or alternatively by software code representation thereof.

Although various systems and methods are described herein with reference to specific embodiments, modifications and changes may be made without departing from the scope of the present disclosure, as set forth in the claims below. Accordingly, the specification and figures are to be regarded in an illustrative rather than a restrictive sense, and all such modifications are intended to be included. Any benefits, advantages, or solutions to problems that are described herein regarding specific embodiments are not intended to be construed as a critical, required, or essential feature or element of any or all the claims.

Reference is made herein to "configuring" a device or a device "configured to" perform some operation(s). This may include selecting predefined logic blocks and logically associating them. It may also include programming computer software-based logic of a retrofit control device, wiring discrete hardware components, or a combination thereof. Such configured devices are physically designed to perform the specified operation(s).

Unless stated otherwise, terms such as "first" and "second" are used to arbitrarily distinguish between the elements such terms describe. Thus, these terms are not necessarily intended to indicate temporal or other prioritization of such elements. The terms "coupled" or "operably coupled" are defined as connected, although not necessarily directly, and not necessarily mechanically. The terms "a" and "an" are defined as one or more unless stated otherwise. The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a system, device, or apparatus that "comprises," "has," "includes" or "contains" one or more elements possesses those one or more elements but is not limited to possessing only those one or more elements. Similarly, a method or process that "comprises," "has," "includes" or "contains" one or more operations possesses those one or more operations but is not limited to possessing only those one or more operations.

**Claims**

1. A processor, comprising:

   a symmetric portion configured to generate Boolean masked shares, wherein the Boolean masked shares constitute a nonce; and
   an asymmetric portion coupled to the symmetric portion, the asymmetric portion configured to produce an Elliptic Curve Digital Signature Algorithm (ECDSA) signature based, at least in part, upon the nonce.

2. The processor of claim 1, wherein the symmetric portion is configured to produce the Boolean masked shares using a Deterministic Random Bit Generator (DRBG).

3. The processor of claim 1 or 2, wherein the symmetric portion is configured to send the Boolean masked shares to the asymmetric portion via a bus.

4. The processor of claim 3, wherein the bus comprises an Advanced Microcontroller Bus Architecture (AMBA) with Advanced eXtensible Interface (AXI) interconnect.

5. The processor of any preceding claim, wherein a first Boolean masked share has a first word length or size, and wherein a second Boolean masked share has a different word length or size.

6. The processor of claim 5, wherein the first word length or size comprises 256 bits.

7. The processor of claim 6, wherein the second word length or size comprises 32 or 64 bits.

8. The processor of claim 6, wherein the second word length or size matches a word length or size of the processor.

9. The processor of any preceding claim, wherein the asymmetric portion is configured to convert the Boolean masked shares into arithmetic masked shares.

10. The processor of claim 9, wherein arithmetic masked shares comprise modular arithmetic masked shares.

11. A method, comprising:

    receiving, by an asymmetric portion of a processor from a symmetric portion of the processor, first and second Boolean masked shares; and
    producing a digital signature based, at least in part, upon the first and second Boolean masked shares.

12. The method of claim 11, wherein the first Boolean masked share has a first word length or size, and wherein the second Boolean masked share has a second word length or size.

13. The method of claim 12, wherein the first word length is larger than a word length or size of the processor, and wherein the second word length or size matches a word length or size of the processor.

14. The method of any one of claims 11 to 13, wherein the asymmetric portion is configured to convert the Boolean masked shares into arithmetic masked shares.

**15.** The method of claim 14, wherein arithmetic masked shares comprise modular arithmetic masked shares.

**Amended claims in accordance with Rule 137(2) EPC.**

**1.** A processor (300), comprising:

a symmetric portion (301) configured to generate Boolean masked shares (304), wherein the Boolean masked shares constitute a nonce; and an asymmetric portion (302) coupled to the symmetric portion (301), the asymmetric portion configured to produce an Elliptic Curve Digital Signature Algorithm, ECDSA, signature based, at least in part, upon the nonce; wherein: the asymmetric portion (302) is configured to convert the Boolean masked shares (304) into arithmetic masked shares (306).

**2.** The processor (300) of claim 1, wherein the symmetric portion (301) is configured to produce the Boolean masked shares (304) using a Deterministic Random Bit Generator, DRBG, (303).

**3.** The processor (300) of claim 1 or 2, wherein the symmetric portion (301) is configured to send the Boolean masked shares (304) to the asymmetric portion (302) via a bus (305).

**4.** The processor (300) of claim 3, wherein the bus (305) comprises an Advanced Microcontroller Bus Architecture, AMBA, with Advanced eXtensible Interface, AXI, interconnect.

**5.** The processor (300) of any preceding claim, wherein a first Boolean masked share (N1) has a first word length or size, and wherein a second Boolean masked share (N2) has a different word length or size.

**6.** The processor (300) of claim 5, wherein the first word length or size comprises 256 bits.

**7.** The processor (300) of claim 6, wherein the second word length or size comprises 32 or 64 bits.

**8.** The processor (300) of claim 6, wherein the second word length or size matches a word length or size of the processor.

**9.** The processor (300) of claim 1, wherein arithmetic masked shares (306) comprise modular arithmetic masked shares.

**10.** A method, comprising:

receiving, by an asymmetric portion (302) of a processor (300) from a symmetric portion (301) of the processor, first and second Boolean masked shares (N1, N2); and producing a digital signature based, at least in part, upon the first and second Boolean masked shares (N1, N2); wherein: the asymmetric portion (302) is configured to convert the Boolean masked shares (304) into arithmetic masked shares (306).

**11.** The method of claim 10, wherein the first Boolean masked share (N1) has a first word length or size, and wherein the second Boolean masked share (N2) has a second word length or size.

**12.** The method of claim 11, wherein the first word length is larger than a word length or size of the processor (300), and wherein the second word length or size matches a word length or size of the processor.

**13.** The method of claim 10, wherein arithmetic masked shares (306) comprise modular arithmetic masked shares.

FIG. 1

HETEROGENEOUS SYSTEM 200

SYM 201

DRBG 203

NONCE 204

205

ASYM 202

ECDSA 206

NONCE 204

**FIG. 2**

**("Prior Art")**

HETEROGENEOUS SYSTEM 300

SYM 301

DRBG 303

N1|N2 304

305

ASYM 302

ECDSA 307

A1|N2 306

N1|N2 304

**FIG. 3**

START 401

↓

GENERATE RANDOM VALUE 402

↓

PRODUCE BOOLEAN MASKED SHARES 403

↓

TRANSFER SHARES OVER BUS 404

↓

CONVERT BOOLEAN MASK TO ARITHMETIC MASK 405

↓

PERFORM ECDSA COMPUTATION USING NONCE AS ARITHMETIC SHARES 406

↓

END 407

400

**FIG. 4**

# EUROPEAN SEARCH REPORT

**Application Number**

EP 24 30 5935

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCOTT FLUHRER: "Scalar Blinding on Elliptic Curves based on Primes with Special Structure", IACR, INTERNATIONAL ASSOCIATION FOR CRYPTOLOGIC RESEARCH , vol. 20190305:124745 11 August 2015 (2015-08-11), pages 1-8, XP061034535, Retrieved from the Internet: URL:http://eprint.iacr.org/2015/801.pdf [retrieved on 2015-08-11] * section 5.2 * | 1-15 | INV. H04L9/00 H04L9/32 |
| A | Pornin Thomas: "RFC 6979 - Deterministic Usage of the Digital Signature Algorithm (DSA) and Elliptic Curve Digital Signature Algorithm (ECDSA)", , 31 August 2013 (2013-08-31), XP093227530, Retrieved from the Internet: URL:https://datatracker.ietf.org/doc/html/rfc6979 * sections 3.1, 3.2 * | 1-15 | |
| A | CERDEIRA DAVID ET AL: "SoK: Understanding the Prevailing Security Vulnerabilities in TrustZone-assisted TEE Systems", 2020 IEEE SYMPOSIUM ON SECURITY AND PRIVACY (SP), IEEE, 18 May 2020 (2020-05-18), pages 1416-1432, XP033800639, DOI: 10.1109/SP40000.2020.00061 [retrieved on 2020-07-29] * section IV * | 1-15 | |

**TECHNICAL FIELDS SEARCHED (IPC)**

H04L

The present search report has been drawn up for all claims

| Place of search | Date of completion of the search | Examiner |
|---|---|---|
| Munich | 28 November 2024 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)